# DEMANDE DE BREVET EUROPEEN

(11) **EP 2 096 050 A1**
(43) Date de publication de la demande: **02.09.2009**
(21) Numéro de dépôt: 09290091.9
(22) Date de dépôt: 09.02.2009
(51) Int. Cl.: B65G 1/137

(54) **Magasin de pièces détachées et procédé d'affectation de lots de pièces détachées**

(30) Priorité: 28.02.2008 FR 0801096
(71) Demandeur: Oscaro com, 75008 Paris (FR)
(72) Inventeur: Luiggi, Pierre-Noël, 75017 Paris (FR)
(74) Mandataire: Eidelsberg, Victor Albert

(57) **Abrégé**

Ce magasin de pièces détachées comprend plusieurs casiers qui contiennent chacun un lot de pièces détachées et plusieurs lots sont composés chacun de pièces détachées d'un type différent.

Application à l'industrie automobile.

## Description

La présente invention se rapporte aux magasins de pièces détachées et aux procédés d'affectation de lots de pièces détachées. Elle s'applique notamment dans le domaine de l'industrie automobile, mais aussi dans tout autre domaine industriel dans lequel des véhicules ou des machines nécessitent pour leur réparation des pièces détachées différentes.

Dans un magasin de pièces détachées chaque type de pièces détachées est bien rangé dans un casier. Il en va ainsi par exemple au US 2003/055753, dans lequel, au paragraphe 60, on mentionne qu'un kit, c'est-à-dire un lot, consiste en un container, c'est-à-dire un casier. Les kits, c'est-à-dire les containers ou casiers, contiennent un jeu de pièces. Ils peuvent contenir aussi des consommables. En tant que pièces détachées, il apparaît que le casier d'une part contient seulement un lot de même pièces et d'autre part que le casier ou lot, qui est considéré comme équivalent, est affecté une fois pour toute à une machine.

L'invention rompt complètement avec cette façon de faire.

Suivant l'invention plusieurs casiers contiennent chacun un lot de pièces détachées et plusieurs lots sont composés chacun de pièces détachées d'un type différent.

On peut trouver ainsi une pièce détachée d'un même type dans un très grand nombre de casier associée à d'autres pièces détachées d'un autre type.

Ce désordre apparent correspond à un ordre préétabli, les pièces détachées étant rassemblées en lot et chaque lot étant mis dans un casier de sorte que le casier correspond au destinataire, que ce soit le garagiste qui a commandé ou le véhicule qui a besoin d'un assortiment de pièces détachées en comprenant plusieurs de types différents.

Cette façon de ranger les pièces détachées permet de gagner beaucoup de temps, puisque les lots qu'il aurait fallu constituer de toute façon ultérieurement si les pièces détachées avaient été rangées de manière classique, une pièce détachée d'un.même type dans son casier, s'effectue maintenant immédiatement, avec la possibilité d'être averti, par exemple par ordinateur, qu'un lot est complet et qu'il peut être retiré du casier et envoyé au destinataire.

A un instant donné, le magasin est tel que défini ci-dessus, étant entendu que les casiers se vident progressivement et sont remplis à nouveau par des lots différents destinés à des destinataires différents, étant entendu que parfois un même casier peut être affecté plusieurs fois de suite à un même destinataire. Mais en général, chaque casier change de destinataire.

Les types de pièces peuvent différer par la nature, par la dimension, par la couleur et/ou par l'origine (fabricant) des pièces détachées.

Plusieurs casiers contiennent respectivement à un instant donné plusieurs lots composés différemment.

Les casiers sont regroupés en rangées et il est affecté à tous les lots contenus dans une même rangée des numéros, une partie de chacun de ces numéros étant la même pour tous les lots d'une même rangée. La partie est notamment constituée du dernier chiffre ou des derniers chiffres du numéro. On peut ainsi affecter à chaque lot un numéro et, en fonction par exemple du dernier chiffre du numéro, le ranger dans la rangée correspondante en sorte que les casiers vides sont, conformément à la loi des probabilités, répartis uniformément entre les rangées, ce qui facilite la gestion du magasin, tant lorsqu'il faut mettre un lot nouveau dans un casier vide que lorsqu'il faut retrouver le lot complet à retirer et auquel a été affecté un numéro. De préférence, chaque rangée a le même nombre de casiers. Il est bon également que l'on puisse accéder à chaque casier d'une rangée indépendamment des autres casiers de la rangée de sorte que l'on peut mettre les lots dans un casier de la rangée et les en retirer sans avoir à manipuler ou à déranger les autres lots de la rangée. A cet effet, les casiers sont accessibles par leur sommet ou par leur face frontale.

De préférence, les casiers d'une même rangée sont séparés les uns des autres par des éléments de séparation amovibles. Ces éléments de séparation peuvent être des cloisons, mais aussi une simple barre marquant la distinction entre deux lots qui se suivent. Lorsqu'un lot est très volumineux on peut aussi le mettre dans deux casiers qui se succèdent dans une même rangée et qui deviennent alors pendant le temps où ce lot sera constitué un seul et même casier.

L'invention a également pour objet un procédé d'affectation de lots de pièces détachées, au moins en partie différentes entre elles, à des destinataires respectivement, dans lequel on identifie chaque lot par un numéro et on affecte en magasin une même rangée de casiers d'emmagasinage à des lots dont une partie des chiffres composant le numéro est la même, on met les pièces du lot dans le casier qui lui correspond au fur et à mesure de leur arrivée en magasin, on retire le lot du casier lorsque le lot est complet et on l'envoie au destinataire et on remplit à nouveau le casier d'un lot différent de celui qu'il avait avant le retrait.

L'exemple suivant illustre l'invention.

Un magasin de pièces détachées a dix rangées constituées chacune de sept casiers. On illustre la composition des lots dans la première rangée et dans la deuxième rangée.

Dans le premier casier de la première rangée il y a à l'instant considéré deux jantes et un clignotant. Le lot sera complété lorsque l'on ajoutera un tapis de sol. A un instant ultérieur, on mettra ce tapis de sol et on retira le lot de ce casier. Ce casier deviendra vide. Il pourra recevoir un autre lot dont le numéro se termine par 1. Le lot qui était jusqu'ici dans ce casier avait aussi un numéro qui se terminait par 1. Le casier numéro deux comprend un pneumatique d'une certaine marque et un rétroviseur de couleur bleu. Il lui manque un clignotant pour être complet. Le troisième casier de la première rangée est vide. Il est prêt à recevoir un nouveau lot. Le quatrième.casier comprend une courroie de transmission et un lève-glace. Il lui manque deux feux arrières pour être complet. Il en va ainsi de même pour tous les autres casiers de la rangée, dont les lots sont composés différemment et dont la composition des lots variera au cours du temps. Tous les lots de cette rangée ont un numéro qui se termine par 1, tandis que tous les lots de la deuxième rangée ont un numéro qui se termine par 2 et il en ira de même pour les autres rangées,la dernière rangée ayant des lots dont le numéro se termine par zéro.

## Revendications

1. Magasin de pièces détachées comprenant des casiers dans lesquels se trouvent des pièces détachées de type différent,
**caractérisé en ce que**
- plusieurs casiers contiennent chacun un lot de pièces détachées,
- plusieurs lots sont composés chacun de pièces détachées d'un type différent,
- les casiers se vident et sont remplis à nouveau par des lots différents,
- les casiers sont regroupés en rangées et il est affecté à tous les lots contenus dans une même rangée des numéros, une partie de chacun de ces numéros étant la même pour tous les lots d'une même rangée, et
- un casier n'est pas affecté à demeure à un même destinataire.

2. Magasin de pièces détachées suivant la revendication 1, **caractérisé en ce que** les types de pièces détachées diffèrent par la nature, par la dimension, par la couleur et/ou par l'origine (fabricant) des pièces détachées.

3. Magasin de pièces détachées suivant la revendication 1 ou 2, **caractérisé en ce que** plusieurs casiers contiennent respectivement plusieurs lots composés différemment.

4. Magasin de pièces détachées suivant la revendication 1, 2 ou 3, **caractérisé en ce que** la partie est constituée du dernier chiffre ou des derniers chiffres du numéro.

5. Magasin de pièces détachées suivant l'une des revendications 1 à 4, **caractérisé en ce que** chaque rangée a le même nombre de casiers.

6. Magasin de pièces détachées suivant l'une des revendications 1 à 5, **caractérisé en ce que** les casiers d'une même rangée sont séparés les uns des autres par des éléments de séparation amovibles.

7. Magasin de pièces détachées suivant l'une des revendications 1 à 6, **caractérisé en ce que** chaque casier d'une rangée est accessible indépendamment des autres casiers de la rangée.

8. Procédé d'affectation de lots de pièces détachées, au moins en partie différentes entre elles, à des destinataires respectivement, **caractérisé en ce que** l'on identifie chaque lot par un numéro, l'on affecte en magasin une même rangée de casiers d'emmagasinage à des lots dont une partie des chiffres composant le numéro est la même, on met les pièces du lot dans le casier qui lui correspond au fur et à mesure de leur arrivée en magasin, on retire le lot du casier lorsque le lot est complet, on l'envoie au destinataire et on remplit à nouveau le casier d'un lot différent de celui qu'il avait avant le retrait.
